# EUROPEAN PATENT SPECIFICATION

(11) **EP 2 692 684 B1**
(45) Date of publication and mention of the grant of the patent: **07.07.2021**
(21) Application number: 13176071.2
(22) Date of filing: 11.07.2013
(51) Int. Cl.: B66C 23/90

(54) **Working range diagram-display apparatus**
Anzeigevorrichtung für Arbeitsbereichsdiagramm
Appareil d'affichage par schéma de plage de travail

(30) Priority: 01.08.2012 JP 2012170702
(43) Date of publication of application: 05.02.2014
(73) Proprietor: Tadano Ltd., Takamatsu Kagawa 761-0185 (JP)
(72) Inventor: Oshima, Masanori, Takamatsu, Kagawa 761-0185 (JP); Kumano, Kaori, Takamatsu, Kagawa 761-0185 (JP)
(74) Representative: Plougmann Vingtoft a/s

(56) References cited:
- EP-A2- 1 868 150
- WO-A1-2011/148946
- JP-A- H0 656 400
- JP-U- S 494 353
- US-B1- 6 170 681
- None

## Description

### BACKGROUND OF THE INVENTION

### Field of the Invention

The present invention relates to a working range diagram-display apparatus and, more particularly, to a working range diagram-display apparatus for a working machine having a boom such as a boom lift.

### Description of the Related Art

As for working machines having a boom such as boom lifts, a range where safe working is ensured is defined in a movable region of the boom in terms of stability against overturning or strength of a component. A working range diagram is used for showing such a working range, and thereby a work plan is made based on the working range diagram.

A conventional working range diagram is shown with a two-dimensional spatial coordinate system with a horizontal axis indicating a load radius and a vertical axis indicating a ground clearance. Additionally, forward/backward performance and sideward performance is often shown in one working range diagram. Therefore, it is difficult for a worker unfamiliar with the working range diagram to imagine a three-dimensional working range. Unfortunately, a mistake in the work plan is made due to a subjective impression or a misunderstanding, leading to rework or the like.

A working range diagram-display apparatus showing a two-dimensional working range diagram is known from Japanese Patent Laid-Open No. 6-56400. EP 1 868 150 A2 discloses a crane planner for planning an operation of a crane. US 6 170 681 B1 discloses a working range diagram-display apparatus according to the preamble of claim 1.

In view of the above circumstances, an object of the present invention is to provide a working range diagram-display apparatus with which a working range can be easily grasped.

### SUMMARY OF THE INVENTION

A working range diagram according to the present invention is a diagram showing a working range in which a boom of a working machine having the boom can safely move, wherein the working range is shown with a three-dimensional spatial coordinate system.

A working range diagram-display apparatus according the present invention comprises: working condition-input means for having a working condition of the working machine input thereto; working range-calculation means for determining a working range in the working condition input from the working condition-input means; and display means for displaying the working range diagram showing the working range determined by the working range-calculation means. The apparatus further comprises an input means, said input means being selected from a touch panel, a keyboard or a mouse; and the working condition-input means displays an input box of each of the working conditions on the display means and said working conditions are input by the input means.

A working range diagram-display apparatus according to an embodiment is configured to show a part of or all of forward performance, backward performance, right sideward performance and left sideward performance in the working range in different display formats.

A working range diagram-display apparatus according to an example which does not form part of the claimed subject-matter includes:
visual field condition-input means for having a visual field condition of the working range diagram input thereto; visual field-conversion means for subjecting the working range diagram to visual field conversion based on the visual field condition input from the visual field condition-input means; and
display means for displaying the working range diagram subjected to the visual field conversion by the visual field-conversion means.

According to the present invention, the working range can be easily grasped because the working range is shown three-dimensionally. Therefore, a mistake in a work plan is hardly made due to a subjective impression or a misunderstanding, thereby preventing rework or the like.

According to the second embodiment of the present invention, the working range can be more easily grasped because the frontward performance, the backward performance, the right sideward performance and the left sideward performance can be distinguished from each other.

According to the present invention, when a new working condition is input to the working condition-input means, the working range diagram changes depending on the working condition. This is because the working range-calculation means determines a working range in the new working condition. Therefore, a work plan can be easily made, preventing rework or the like.

According to the non-claimed example described above, when a new visual field condition is input to the visual field condition-input means, the working range diagram can be rotated, enlarged and reduced. This is because the visual field-conversion means converts a visual field of the working range diagram based on the new visual field condition. Therefore, the working range can be confirmed from various angles, leading to easier grasping of the working range.

### BRIEF DESCRIPTION OF THE DRAWINGS

FIG. 1 is a working range diagram according to an embodiment of the present invention;
FIG. 2 is a block diagram of hardware of a working range diagram-display apparatus according to an embodiment of the present invention;
FIG. 3 is a block diagram of the working range diagram-display apparatus;
FIG. 4 is a front view of the working range diagram-display apparatus;
FIG. 5 is a front view of the working range diagram-display apparatus and is also a diagram illustrating a rotation of the working range diagram;
FIG. 6 shows working range diagrams displayed on the working range diagram-display apparatus, and (a) a working range diagram with a vehicle viewed from a front and (b) a working range diagram with the vehicle viewed from a side;
FIG. 7 is a working range diagram displayed on the working range diagram-display apparatus with the vehicle viewed from an immediately above;
FIG. 8 shows working range diagrams displayed on the working range diagram-display apparatus when outriggers abnormally project, and (a) a working range diagram with the vehicle viewed from a diagonally above and (b) a working range diagram with the vehicle viewed from the immediately above; and
FIG. 9 is a side view of a common boom lift.

### DETAILED DESCRIPTION OF THE PREFERRED EMBODIMENTS

An embodiment of the present invention will now be described with reference to the drawings.

A working range diagram according to the present invention shows a working range for working machines having a boom such as boom lifts or cranes. Although a boom lift will be described as an example hereinafter, the working range diagram of the present invention can be similarly applied to the other working machines.

A configuration of a common boom lift 100 is first described with reference to FIG. 9. In FIG. 9, reference numeral 110 indicates a vehicle, which is provided with outriggers 111 ensuring stability during working in addition to a driving source for vehicle running, an operator cab and wheels. Four outriggers 111 are provided at four corners on all sides of a platform of the vehicle 110 in the shown example. A swivel base 120 is mounted on a rear side of the platform of the vehicle 110. A hydraulic motor or the like allows the swivel base 120 to swivel 360 degrees in a horizontal plane.

A boom 130 is mounted movably upward/downward on the swivel base 120. The boom 130 includes a main boom 131 on a base end side, and multi-stage auxiliary booms 132 and 133 fitted and inserted into the main boom 131 in a telescopic manner. A hydraulic cylinder causes each of the auxiliary booms 132 and 133 to extend and contract, thereby enabling a variation in length of the boom 130.

A base end of the main boom 131 is pivotably supported by the swivel base 120. A hydraulic cylinder is provided between the main boom 131 and the swivel base 120. Extension of the hydraulic cylinder causes the boom 130 to move upward, whereas contraction of the hydraulic cylinder causes the boom 130 to move downward.

A tip of the boom 130, that is, a tip of the auxiliary boom 133 is provided with a support. The support pivotally supports a basket type bucket 150 which a worker can get in, and a lifting device 160 including a winch and a jib so as to allow the bucket 150 and the lifting device 160 to swivel in a horizontal plane individually.

As for such boom lift 100, a range where safe working is ensured (working range) is defined in a movable region of the boom 130 in terms of stability against overturning or strength of a component. The working range in the present description indicates a range where the tip of the boom 130 can safely move.

The working range changes depending on working conditions such as a width of projection of the outrigger 111, a live load applied to the bucket 150, a lifting load applied to the lifting device 160 and the like. More specifically, a wide width of projection of the outrigger 111 increases a stabilizing moment because a grounded position of the outrigger 111, that is, a fulcrum of overturning is located apart from the center of gravity of the boom lift 100. Moreover, a small live load or lifting load reduces an overturning moment. Consequently, the boom lift 100 does not easily overturn, leading to a wide working range. On the contrary, a narrow width of projection of the outrigger 111 reduces the stabilizing moment because the fulcrum of overturning is located close to the center of gravity of the boom lift 100. Moreover, a large live load or lifting load increases the overturning moment. Consequently, the boom lift 100 easily overturns, leading to a narrow working range.

In the present description, the working condition indicates a condition influencing the working range. In the case of a crane, the working condition includes a width of projection of an outrigger and a lifting load.

Generally, since the vehicle 110 of the boom lift 100 is long in a front-back direction, an interval between the front and the back is wide, whereas an interval between the right and the left is narrow in an arrangement of the outriggers 111. The stability against overturning is therefore weak in the sides compared with that of in the front and the back. That is, the working range is wide in the front and the back but narrow in the sides.

In the working range, the front of the vehicle 110 is referred to as frontward performance; the back thereof backward performance; a right side thereof right sideward performance; a left side thereof left sideward performance. Additionally, the frontward performance and the backward performance is referred to as frontward/backward performance, while the right sideward performance and the left sideward performance is referred to as sideward performance.

### (Working Range Diagram)

A working range diagram according to an embodiment of the present invention will be described now.

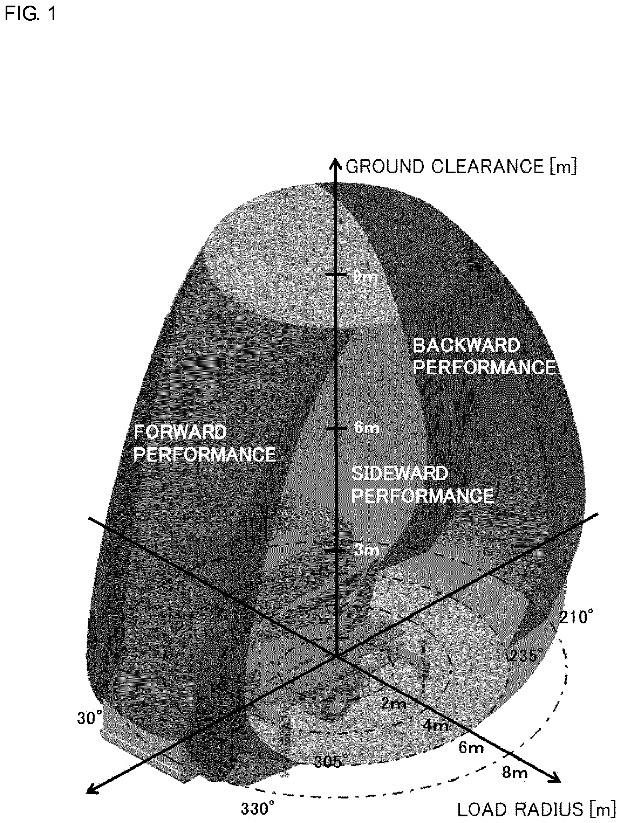

As shown in FIG. 1, the working range diagram of the present embodiment shows the above working range with a three-dimensional spatial coordinate system. The following three-dimensional spatial coordinate systems may be employed: a cylindrical coordinate system with a load radius, a ground clearance and an angle of swivel being dimensions; a Cartesian coordinate system with a load radius in the front-back direction of the vehicle 110, a load radius in a right-left direction thereof and the ground clearance being dimensions; or a polar coordinate system with a length of the boom 130, the angle of swivel and an angle of derricking being dimensions. Here, the load radius indicates a length in a horizontal direction from a center of swivel of the swivel base 120 to the tip of the boom 130, while the ground clearance indicates a height of the tip of the boom 130 with respect to the ground.

The working range diagram in the present embodiment shows the frontward/backward performance in dark gray and the sideward performance in light gray. The frontward/backward performance can therefore be distinguished from the sideward performance easily.

The distinction may be made by changing a display format such as a color or hatching other than the distinction based on a shade of color. The frontward performance, the backward performance, the right sideward performance and the left sideward performance may also be displayed in different display formats, thereby enabling the distinction.

Obviously, the shown working range also changes in the working range diagram of the present embodiment depending on working conditions such as a width of projection of the outrigger 111, a live load applied to the bucket 150, a lifting load applied to the lifting device 160 and the like.

Since the working range diagram is shown with the three-dimensional spatial coordinate system and an image can be thrown to various angles for depiction, the working range diagram may be obtained by throwing an image to a readily understandable angle.

A shape of the boom lift 100 may be shown in the working range diagram, similarly to the present embodiment, or not necessarily shown. However, if the shape of the boom lift 100 is shown in the working range diagram, the working range can be preferably grasped, comparing the shape of the boom lift 100.

As described above, since the working range is shown three-dimensionally in the working range diagram of the present embodiment, it is easy for a worker unfamiliar with a working range diagram to grasp a working range. A mistake in a work plan is hardly made due to a subjective impression or a misunderstanding, thereby preventing rework or the like.

Moreover, since the frontward/backward performance can be distinguished from the sideward performance, the working range can be grasped more easily.

The working range diagram in the present embodiment is displayed on a working range diagram-display apparatus described later, as well as can be printed on paper such as a brochure or a specification.

### (Working Range Diagram-Display Apparatus)

A working range diagram-display apparatus 1 according to the present invention displays the above working range diagram and is configured by installing a working range diagram-display program described later in a tablet-type device or a personal computer.

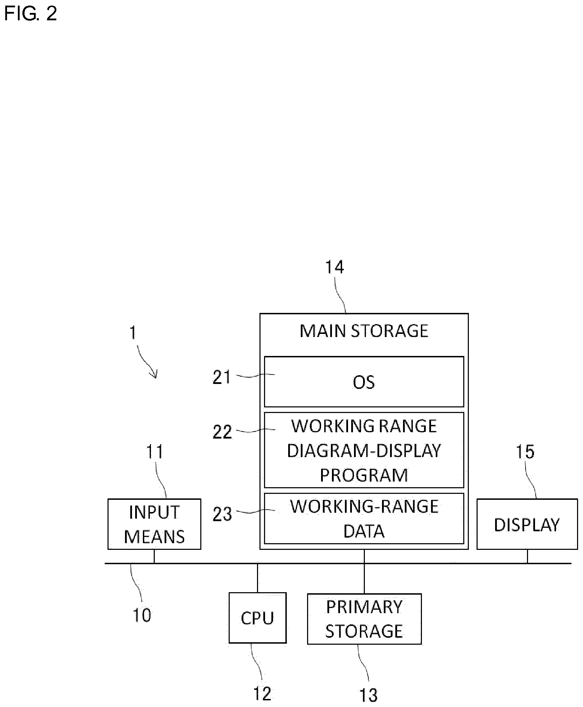

As shown in FIG. 2, in a configuration of hardware of the working range diagram-display apparatus 1, input means 11 such as a touch panel, a keyboard or a mouse, a CPU 12 of processing means, a primary storage 13 such as a memory, a main storage 14 such as a hard disk, and a display 15 of display means are connected to a bus 10. The main storage 14 stores a working range diagram-display program 22 and working-range data 23 in addition to an operating system (OS) 21.

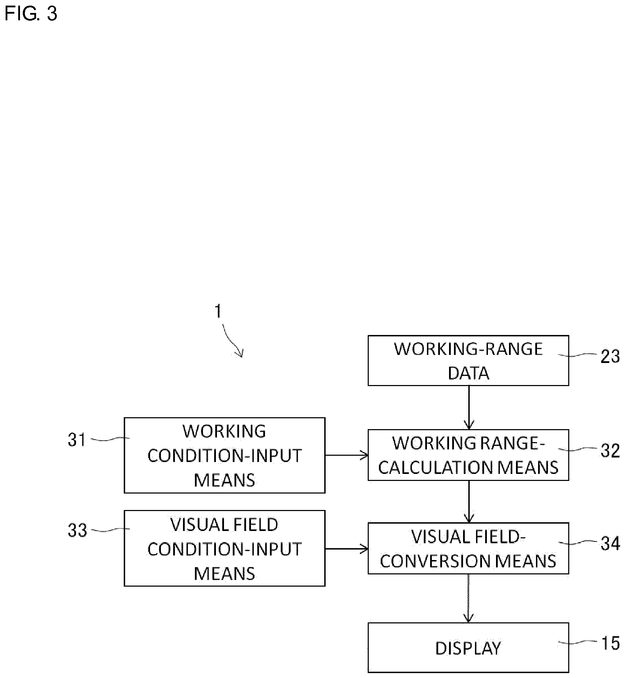

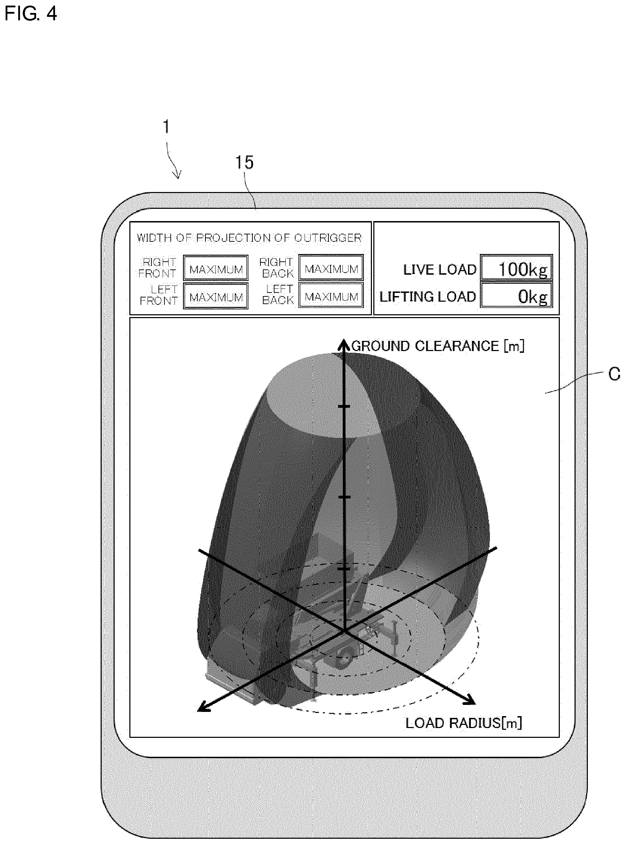

When the CPU 12 executes the working range diagram-display program 22, working condition-input means 31, working range-calculation means 32, visual field condition-input means 33, and visual field-conversion means 34 function as shown in FIG. 3. The means 31 to 34 co-operates each other to display a working range diagram C on the display 15 (See FIG. 4).

Note that FIG. 4 shows an example in which the working range diagram-display apparatus 1 is a tablet-type device.

Working conditions of the intended boom lift 100 such as a width of projection of the outrigger 111, a live load applied to the bucket 150 and a lifting load applied to the lifting device 160 are input to the working condition-input means 31.

As shown in FIG. 4, the working condition-input means 31 displays an input box of each of the working conditions on the display 15. The working conditions can be set by the input means 11. In the shown example, as to a width of projection of the outrigger, four outriggers 111 in the right-front, left-front, right-back and left-back are each provided with an input box separately, and thereby different values can be set. However, a common value to all of the outriggers 111 may be set in one input box. Although the width of projection of the outrigger can be set by stages such as maximum, middle and minimum in the shown example, the width may be set by a numerical value or the like without stages. Further, in addition to the input box for the width of projection of the outrigger, the width of projection of the outrigger may be set by extending/contracting the outrigger of the boom lift displayed in the working range diagram C with a flick operation of a touch panel or a drag operation of a mouse.

The live load and the lifting load may also be set by a numerical value or the like without stages or may be set by stages.

As shown in FIG. 3, the working range-calculation means 32 determines a working range in working conditions based on the working conditions input from the working condition-input means 31 and the working-range data 23.

Various methods can be employed as a method for determining a working range. For example, working ranges corresponding to respective working conditions are stored individually as the working-range data 23, and then the working range-calculation means 32 may call a working range corresponding to the input working condition. Alternatively, information such as a shape, a weight and strength of a component of the intended boom lift 100 is stored as the working-range data 23, and then the working range-calculation means 32 may calculate a working range in the input working condition based on the information.

Visual field conditions such as a location of a visual point and a direction of a line of vision in the working range diagram are input to the visual field condition-input means 33. The visual field-conversion means 34 has the working range input from the working range-calculation means 32 and converts a visual field of the working range diagram showing the input working range based on the visual field conditions input from the visual field condition-input means 33. The visual field conversion here indicates one kind of processing for displaying three-dimensional data on a two-dimensional display or the like. In the conversion, the three-dimensional data is subjected to translation, rotation, enlargement/reduction or the like according to visual filed conditions such as a location of a visual point and a direction of a line of vision.

The three-dimensional data of the working range diagram is output to the display 15 after the visual field conversion by the visual field-conversion means 34. The display 15 displays the working range diagram C subjected to the visual field conversion.

Various means may be employed as the visual field condition-input means 33. The visual field condition-input means 33 is simply required to obtain a visual field condition by an operation of the touch panel or an operation of the mouse on the working range diagram C displayed on the display 15.

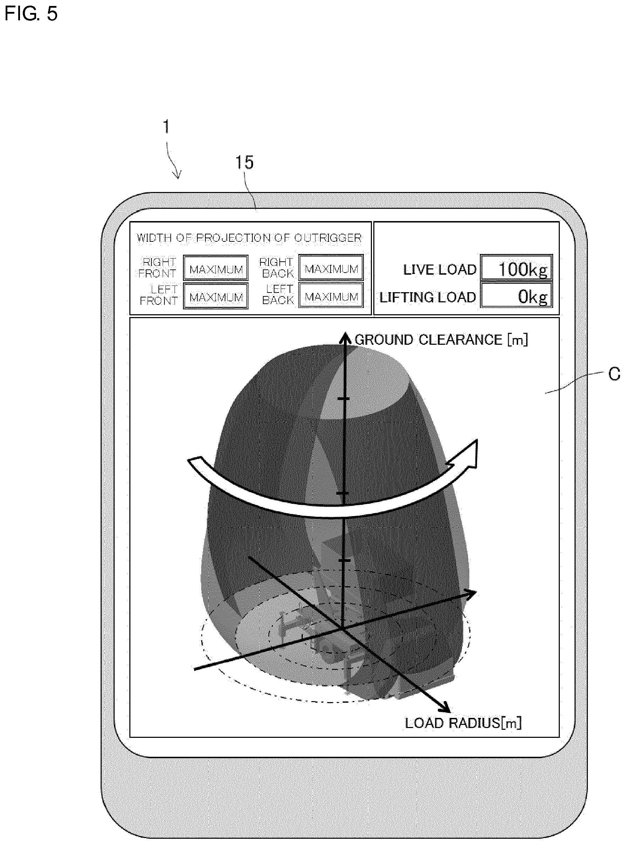

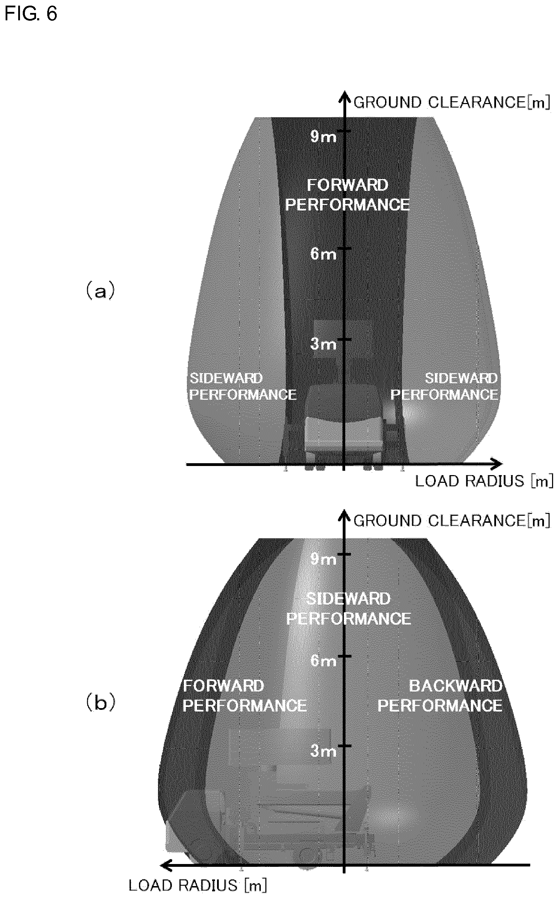

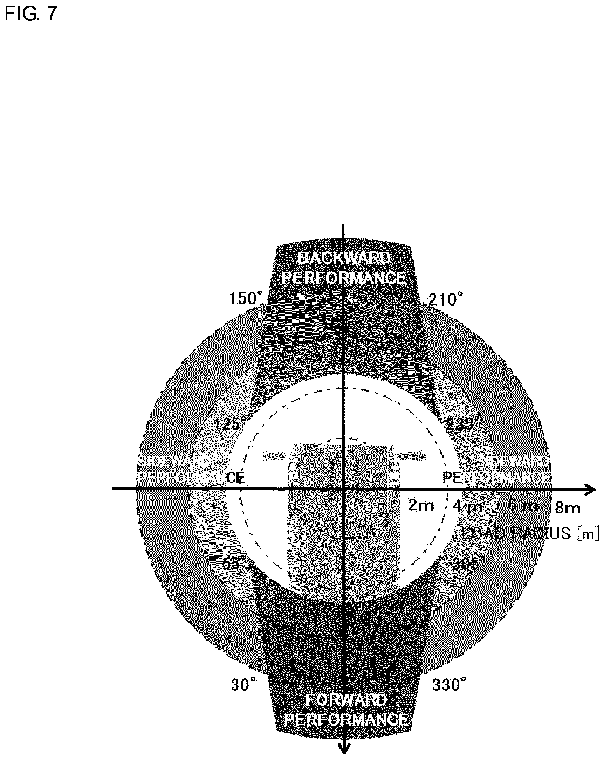

As shown in FIG. 5, for example, a location of a visual point and a direction of a line of vision are changed by the flick operation of the touch panel or the drag operation of the mouse on the working range diagram C, and then the working range diagram C subjected to the visual field conversion based on the new visual field information is depicted again. Consequently, the working range diagram C can be displayed so as to rotate according to the operation. The working range diagram C with the vehicle 110 viewed from the front (see FIG. 6 (a)), the working range diagram C with the vehicle 110 viewed from the side (see FIG. 6 (b)), and the working range diagram C with the vehicle 110 viewed from the immediately above (see FIG. 7) can also be displayed according the similar operation.

Moreover, the location of the visual point is changed along the direction of the line of vision by pinch-in, pinch-out operations of the touch panel or an operation of a mouse wheel. The working range diagram C can therefore be displayed in an enlarged or reduced manner.

As described above, when a new visual field condition is input to the visual field condition-input means 33, the visual field-conversion means 34 converts the visual field of the working range diagram C based on the new visual field condition. This enables rotation and enlargement/reduction of the working range diagram C. Therefore, the working range can be confirmed from various angles, leading to easier grasping of the working range.

In the working range diagram-display apparatus 1, when a new working condition is input to the working condition-input means 31, the working range-calculation means 32 determines a working range in the new working condition, thereby changing the working range diagram C according to the working condition. Therefore, the work plan can be easily made, preventing rework or the like.

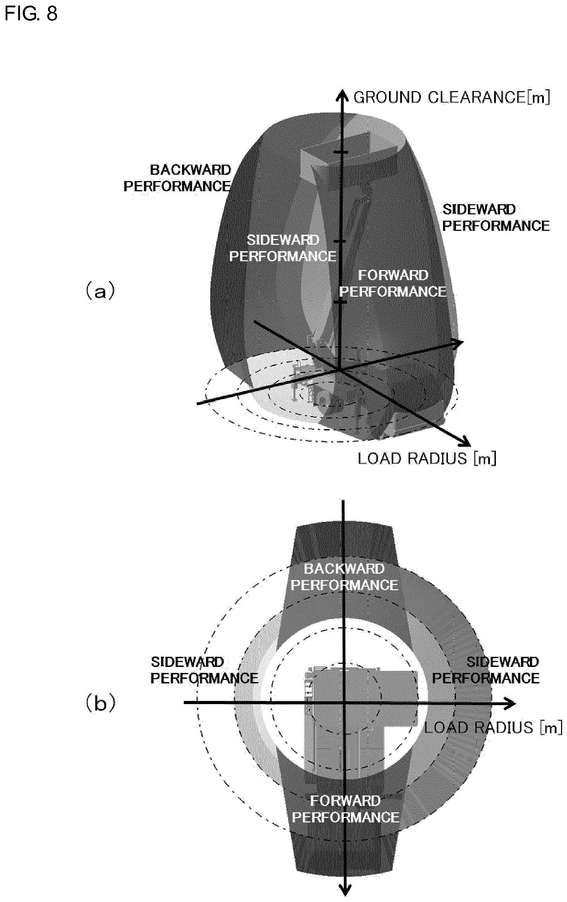

As shown in FIG. 8, for example, widths of projection of the outriggers in the right-front and right-back are set to be minimum, while widths of projection of the outriggers in the left-front and left-back are set to be maximum. In that case, the working range diagram C showing the outriggers abnormally projecting is displayed. Working may be required under such condition where the outriggers abnormally project depending on circumstances of a working site. Even in that case, the working range diagram C in the working site can be confirmed, thereby easily making the work plan.

As described above, since the working range C is shown three-dimensionally, the working range can be easily grasped. Consequently, a mistake in the work plan is hardly made due to a subjective impression or a misunderstanding, thereby preventing rework or the like.

### Reference Signs List

- 1: working range diagram-display apparatus

- 10: bus
- 11: input means
- 12: CPU
- 13: primary storage
- 14: main storage
- 15: display
- 21: OS
- 22: working range diagram-display program
- 23: working-range data
- 31: working condition-input means
- 32: working range-calculation means
- 33: visual field condition-input means
- 34: visual field-conversion means

## Claims

1. A working range diagram-display apparatus configured to display a working range diagram (C) showing a working range in which a boom (130) of a working machine (100) having the boom (130) can safely move in terms of stability against overturning or strength of a component,
wherein the working range is shown with a three-dimensional spatial coordinate system,
wherein the working range diagram-display apparatus comprises:
working condition-input means (31) for having a working condition of the working machine (100) input thereto;
working range-calculation means (32) for determining a working range in the working condition input from the working condition-input means(31); and
display means (15) for displaying the working range diagram (C) showing the working range determined by the working range-calculation means (32), **characterized in that**
the working range diagram-display apparatus further comprises an input means (11), said input means being selected from a touch panel, a keyboard or a mouse; and that
the working condition-input means (31) displays an input box of each of the working conditions on the display means (15) and said working conditions are input by the input means (11).

2. The working range diagram-display apparatus according to claim 1,
wherein a part of or all of forward performance, backward performance, right sideward performance and left sideward performance in the working range is shown in different display formats.

## Patentansprüche

1. Arbeitsbereichsdiagramm-Anzeigevorrichtung, die so konfiguriert ist, dass sie ein Arbeitsbereichsdiagramm (C) anzeigt, das einen Arbeitsbereich zeigt, in dem sich ein Ausleger (130) einer Arbeitsmaschine (100), die den Ausleger (130) aufweist, in Bezug auf die Stabilität gegen Umkippen oder die Festigkeit einer Komponente sicher bewegen kann,
wobei der Arbeitsbereich mit einem dreidimensionalen räumlichen Koordinatensystem dargestellt wird,
wobei die Arbeitsbereichsdiagramm-Anzeigevorrichtung umfasst:
Arbeitszustands-Eingabemittel (31), in die ein Arbeitszustand der Arbeitsmaschine (100) eingegeben werden kann;
Arbeitsbereich-Berechnungsmittel (32) zum Bestimmen eines Arbeitsbereichs in dem von den Arbeitsbedingungs-Eingabemitteln (31) eingegebenen Arbeitszustand; und
Anzeigemittel (15) zum Anzeigen des Arbeitsbereichsdiagramms (C), das den durch die Arbeitsbereichs-Berechnungsmittel (32) bestimmten Arbeitsbereich zeigt, **dadurch gekennzeichnet, dass**
die Arbeitsbereichsdiagramm-Anzeigevorrichtung weiter ein Eingabemittel (11) umfasst, wobei das Eingabemittel ausgewählt ist aus einem Berührungsfeld, einer Tastatur oder einer Maus; und dass
die Arbeitszustands-Eingabemittel (31) ein Eingabefeld für jeden der Arbeitszustände auf dem Anzeigemittel (15) anzeigt und die Arbeitszustände durch die Eingabemittel (11) eingegeben werden.

2. Arbeitsbereichsdiagramm-Anzeigevorrichtung nach Anspruch 1,
wobei ein Teil oder die Gesamtheit der Vorwärtsleistung, der Rückwärtsleistung, der rechten Seitenleistung und der linken Seitenleistung im Arbeitsbereich in verschiedenen Anzeigeformaten angezeigt wird.

## Revendications

1. Appareil d'affichage par schéma de plage de travail, configuré pour afficher un schéma de plage de travail (C) montrant une plage de travail dans laquelle une flèche (130) d'une machine de travail (100) comportant la flèche (130) peut se déplacer en toute sécurité en termes de stabilité contre le renversement ou de résistance mécanique d'un composant,
dans lequel la plage de travail est présentée avec un système tridimensionnel de coordonnées spatiales,
dans lequel l'appareil d'affichage par schéma de plage de travail comprend :
un moyen d'entrée d'état de travail (31) destiné à avoir un état de travail de la machine de travail (100) entré dans celle-ci ;
un moyen de calcul de plage de travail (32) destiné à déterminer une plage de travail dans l'entrée d'état de travail à partir du moyen d'entrée d'état de travail (31) ; et
un moyen d'affichage (15) destiné à afficher le diagramme de plage de travail (C) montrant la plage de travail déterminée par le moyen de calcul de plage de travail (32), **caractérisé en ce que**
l'appareil d'affichage par schéma de plage de travail comprend en outre un moyen d'entrée (11), ledit moyen d'entrée étant choisi parmi un panneau tactile, un clavier ou une souris ; et **en ce que**
le moyen d'entrée d'état de travail (31) affiche une fenêtre de saisie de chacun des états de travail sur le moyen d'affichage (15) et lesdits états de travail sont entrés par le moyen d'entrée (11).

2. Appareil d'affichage par schéma de plage de travail selon la revendication 1,
dans lequel une partie ou la totalité d'exécution en avant, exécution en arrière, exécution latérale droite et exécution latérale gauche dans la plage de travail est présentée en différents formats d'affichage.
